# EUROPÄISCHE PATENTANMELDUNG

(11) **EP 1 995 665 A2**
(43) Veröffentlichungstag der Anmeldung: **26.11.2008**
(21) Anmeldenummer: 08009176.2
(22) Anmeldetag: 19.05.2008
(51) Int. Cl.: G06F 13/24, G06F 1/32

(54) **Quittiersignal**

(30) Priorität: 19.05.2007 DE 102007023442
(71) Anmelder: ATMEL Germany GmbH, 74072 Heilbronn (DE)
(72) Erfinder: Abt, Christof, 71522 Backnang (DE)
(74) Vertreter: Koch Müller Patentanwaltsgesellschaft mbH

(57) **Zusammenfassung**

Die Erfindung betrifft eine Vorrichtung, aufweisend einen Prozessor (21), ein Peripheriegerät (23, 25) und eine erste Logik (FF7-FF9), und ein Verfahren zum Erzeugen eines Quittiersignals (FF9S). Der Prozessor (21) wird mit einem Prozessortaktsignal (CLK1) getaktet, das asynchron zum Peripherietaktsignal (CLK2) läuft, mit dem das Peripheriegerät (23, 25) getaktet wird. Das Peripheriegerät (23, 25) sendet eine Unterbrechungsanfrage (31) synchron zum Peripherietaktsignal (CLK2) an den Prozessor (21), der daraufhin aus seinem Ruhezustand aufgeweckt wird, um in seinem Arbeitszustand die Unterbrechungsanfrage abzuarbeiten. Nach dem Abarbeiten oder während des Abarbeitens der Unterbrechungsanfrage erzeugt der Prozessor (21) ein zum Prozessortaktsignal (CLK1) synchrones Quittiersignal (QS). Die erste Logik (FF7-FF) erzeugt aus dem zum Prozessortaktsignal (CLK1) synchronen Quittiersignal (QS) ein zum Peripherietaktsignal (CLK2) synchrones Quittiersignal (FF9S), mit dem das Peripheriegerät (23, 25) über die abgearbeitete Unterbrechungsanfrage informiert wird.

## Beschreibung

Die Erfindung betrifft ein Quittiersignal und eine Verwendung des Quittiersignals in einer Radelektronik.

Insbesondere in eingebetteten Systemen befindet sich der Prozessor des Systems meistens in einem energiesparenden Schlaf- oder Ruhezustand (idle state), aus dem er bei einer von einem Peripheriegerät des Systems stammenden Unterbrechungsanfrage aufgeweckt wird. Unterbrechungsanfragen werden im Englischen als Interrupt Request bezeichnet. Nach dem Aufwecken arbeitet der Prozessor die Unterbrechungsanfrage ab und quittiert diese. Insbesondere wenn die Peripheriegeräte mit einem langsameren Takt als der Prozessor getaktet werden, ist es möglich, dass das Peripheriegerät, von dem die Unterbrechungsanfrage stammt, die Quittierung nicht erhält und u.U. die Unterbrechungsanfrage erneut an den Prozessor sendet. Dadurch wird der Prozessor unnötigerweise erneut aufgeweckt, was sich negativ auf den Energieverbrauch des Systems auswirkt.

Aus der Druckschrift DE 101 27 424 A1 ist eine elektronische Schaltung mit asynchroner Taktung von Peripheriegeräten bekannt, mittels derer ein effektiverer Betrieb durchgeführt werden kann. Aus der Druckschrift DD 299 782 A7 ist eine Synchronisationseinrichtung für verschiedene Komponenten bei Mikrorechnersystemen bekannt. Eine weitere elektronische Schaltung zur Energiekontrolle von elektronischen Einheiten ist in der Druckschrift EP 1 785 810 A1 offenbart.

Die Aufgabe der Erfindung ist es, eine Vorrichtung und ein Verfahren zum Erzeugen eines Quittiersignals anzugeben, um die Nachteile des Standes der Technik zu verringern.

Die Aufgabe der Erfindung wird gelöst durch eine Vorrichtung gemäß Anspruch 1 und ein Verfahren gemäß Anspruch 7.

Die erfindungsgemäße Vorrichtung , weist einen Prozessor auf, der mittels eines Prozessortaktsignals getaktet wird und aufgrund einer Unterbrechungsanfrage aus seinem Ruhezustand aufweckbar ist, um in seinem Arbeitszustand die Unterbrechungsanfrage abzuarbeiten und nach dem Abarbeiten oder während des Abarbeitens der Unterbrechungsanfrage ein zum Prozessortaktsignal synchrones Quittiersignal zu erzeugen, wenigstens ein Peripheriegerät, das mittels eines Peripherietaktsignals getaktet wird, das zum Prozessortaktsignal asynchron läuft, und die Unterbrechungsanfrage synchron zum Peripherietaktsignal an den Prozessor sendet, und eine erste Logik, die aus dem zum Prozessortaktsignal synchronen Quittiersignal ein zum Peripherietaktsignal synchrones Quittiersignal erzeugt, mit dem das Peripheriegerät über die abgearbeitete Unterbrechungsanfrage informiert wird.

Das Verfahren weist folgende Verfahrensschritte auf:
- Erzeugen einer zu einem Peripherietaktsignal synchronen Unterbrechungsanfrage mittels eines Peripheriegerätes, das mit dem Peripherietaktsignal getaktet wird,
- Aufwecken eines Prozessors aufgrund der Unterbrechungsanfrage, sodass dieser von seinem Ruhezustand in seinen Arbeitszustand wechselt, um die Unterbrechungsanfrage abzuarbeiten, wobei der Prozessor mit einem Prozessortaktsignal getaktet wird, das asynchron zum Peripherietaktsignal läuft,
- Erzeugen eines zum Prozessortaktsignal synchronen Quittiersignals, nachdem der Prozessor die Unterbrechungsanfrage abgearbeitet hat oder während der Prozessor die Unterbrechungsanfrage abarbeitet, und
- Erzeugen eines zum Peripherietaktsignal synchronen Quittiersignals aus dem zum Prozessortaktsignal synchronen Quittiersignals mittels einer ersten Logik, um das Peripheriegerät über die abgearbeitete Unterbrechungsanfrage zu informieren.

Die erfindungsgemäße Vorrichtung umfasst den Prozessor und das wenigstens eine Peripheriegerät. Das Peripheriegerät und der Prozessor werden jeweils mit unterschiedlichen und zueinander asynchronen Taktsignalen getaktet. Der Prozessor befindet sich in der Regel in seinem energiesparenden Ruhezustand und wird aufgrund der vom Peripheriegerät stammenden Unterbrechungsanfrage aufgeweckt, um in seinem Arbeitszustand die Unterbrechungsanfrage abzuarbeiten. Während des Abarbeitens oder nachdem die Unterbrechungsanfrage abgearbeitet ist, erzeugt der Prozessor das zum Prozessortaktsignal synchrone Quittiersignal, also ein zum Prozessor synchrones Quittiersignal, das unter anderem dafür vorgesehen ist, das Peripheriegerät über die Abarbeitung der Unterbrechungsanfrage zu informieren, so dass dieses beispielsweise nicht nochmals die Unterbrechungsanfrage sendet. Aufgrund des Quittiersignal wird z.B. das Peripheriegerät zurückgesetzt und sendet die Unterbrechungsanfrage nicht nochmals. Das zum Prozessortaktsignal synchrone Quittiersignal kann auch dazu verwendet werden, den Prozessor wieder in seinen Ruhezustand zu versetzen.

Der Prozessor und das Peripheriegerät arbeiten asynchron zueinander. Insbesondere kann der Prozessor mit einem schnelleren Takt als das Peripheriegerät arbeiten, d.h. insbesondere kann die Taktfrequenz des Peripherietaktsignals kleiner als die Taktfrequenz des Prozessortaktsignals sein. Dies kann zu einer Energieeinsparung der erfindungsgemäßen Vorrichtung führen, da das Peripheriegerät durch die langsamere Taktung potenziell weniger Energie verbraucht, als wenn es mit einer größeren Frequenz getaktet werden würde. Der Prozessor befindet sich dagegen meistens in seinem Ruhezustand und befindet sich lediglich zum Abarbeiten der Unterbrechungsanfrage in seinem Arbeitszustand. Eine Taktung mit einer größeren Taktfrequenz beeinträchtigt somit den Energieverbrauch wenn, dann nur relativ wenig.

Insbesondere wenn der Prozessor mit einer größeren Frequenz getaktet wird als das Peripheriegerät ist es möglich, dass das zum Prozessortaktsignal synchrone Quittiersignal zum Zeitpunkt des nächsten Taktzyklus des Peripheriegerätes nicht mehr ansteht und das Peripheriegerät das Quittiersignal nicht erhält. Um dies zu vermeiden, umfasst die erfindungsgemäße Vorrichtung die erste Logik, die aus dem zum Prozessortaktsignal synchronen Quittiersignal das zum Peripherietaktsignal synchrone Quittiersignal erzeugt. Somit sind Voraussetzungen gegeben, dass das Peripheriegerät zuverlässig sein Quittiersignal erhält und demnach nicht ungewollt nochmals dieselbe Unterbrechungsanfrage an den Prozessor richtet.

Gemäß einer Variante der erfindungsgemäßen Vorrichtung umfasst die erste Logik ein erstes Flip-Flop, das mit dem Prozessortaktsignal getaktet wird und dessen Eingangssignal zumindest indirekt das zum Prozessortaktsignal synchrone Quittiersignal ist, und ein zweites Flip-Flop zum Erzeugen des zum Peripherietaktsignal synchronen Quittiersignals, das mit dem Peripherietaktsignal getaktet wird und dessen Eingangssignal das Ausgangssignal des ersten Flip-Flops ist. Mit dem ersten Flip-Flop der ersten Logik wird quasi das zum Prozessortaktsignal synchrone

Quittiersignal eingefangen und anschließend mittels des zweiten Flip-Flops derart synchronisiert, dass es zum Peripherietaktsignal synchron ist. Gemäß dieser Variante kann dem ersten Flip-Flop der ersten Logik das zum Prozessortaktsignal synchrone Quittiersignal direkt zugeführt werden oder ein Signal zugeführt werden, das vom zum Prozessortaktsignal synchronen Quittiersignal abgeleitet ist.

Anstelle des zweiten Flip-Flops können wenigstens zwei hintereinander geschaltete Flip-Flops verwendet werden. Dies erhöht die Stabilität der ersten Logik.

Nach einer Variante der erfindungsgemäßen Vorrichtung weist diese eine zweite Logik auf, die aus der synchron zum Peripherietaktsignal gesendeten Unterbrechungsanfrage eine synchron zum Prozessortaktsignal laufend Unterbrechungsanfrage erzeugt, die dem Prozessor zugeführt wird. Die vom Peripheriegerät stammende Unterbrechungsanfrage ist synchron zum Peripherietaktsignal und asynchron zum Prozessortaktsignal. Insbesondere wenn der verwendete Prozessor Unterbrechungsanfragen nur synchron zu seinem Prozessortaktsignal verarbeiten kann, ergeben sich aufgrund dieser Ausführungsform Vorraussetzungen, dass der Prozessor zuverlässig die Unterbrechungsanfrage erhält.

Die zweite Logik kann aufweisen ein Schieberegister, dessen Eingangssignal die synchron zum Peripherietaktsignal gesendete Unterbrechungsanfrage oder ein zu diesem Signal synchrones Signal ist, eine dem Schieberegister nachgeschaltete Logik zum Erkennen einer Flanke des Ausgangssignals des Schieberegisters und ein Flip-Flop, das mit dem Prozessortaktsignal getaktet wird, dessen Eingangssignal das Ausgangssignal der Logik zum Erkennen einer Flanke ist und dessen Ausgangssignal die zum Prozessortaktsignal synchron laufende Unterbrechungsanfrage ist. Das Schieberegister weist beispielsweise wenigstens zwei in Serie geschaltete Flip-Flops auf, die mit dem Prozessortaktsignal getaktet werden. Insbesondere weist dieses Schieberegister wenigstens drei in Serie geschaltete Flip-Flops auf, wodurch die Stabilität des Schieberegisters erhöht werden kann. Dadurch sind Voraussetzungen geschaffen, dass die nachgeschaltete Logik zum Erkennen einer Flanke des Ausgangssignals des Schieberegisters die Flanke, die insbesondere eine steigende Flanke ist, zuverlässig erkennt.

Die zweite Logik kann auch derart ausgeführt werden, dass sie aus der synchron zum Peripherietakt gesendeten Unterbrechungsanfrage ein Wecksignal für den Prozessor erzeugt. Dieses Wecksignal schaltet beispielsweise einen Taktgenerator zum Erzeugen des Prozessortaktsignales ein, wodurch der Prozessor von seinem Ruhezustand in seinen Arbeitszustand geschaltet wird.

Die erfindungsgemäße Vorrichtung kann beispielsweise für eine Radelektronik verwendet werden. Radelektroniken im Allgemeinen sind dafür vorgesehen, wenigstens einen Reifenparameter eines Reifens zu ermitteln. Der Reifenparameter ist beispielsweise der Reifendruck des Reifens. Die erfindungsgemäße Radelektronik weist neben der erfindungsgemäßen Vorrichtung wenigstens einen Sensor zum Ermitteln des Reifenparameters und einen Sender auf, wobei der Prozessor aufgrund der Unterbrechungsanfrage mittels des Sensors den Reifenparameter ermitteln und eine Nachricht über den Reifenparameter erzeugt, die der Sender sendet.

Radelektroniken sind beispielsweise in einem Reifen integriert oder auf einer Felge, auf der Reifen aufgezogen ist, angeordnet. Im Betrieb des Fahrzeugs, das mit diesen Reifen ausgestattet ist, kann die Radelektronik insbesondere automatisch den Reifendruck des entsprechenden Reifens ermitteln und drahtlos an eine im Fahrzeug angeordnete Steuervorrichtung übermitteln. Aufgrund des ermittelten Reifendruckes kann beispielsweise die Steuervorrichtung ermitteln, ob der Reifendruck eines der Reifen zu niedrig ist, um gegebenenfalls die das Fahrzeug lenkende Person über den zu niedrigen Reifendruck zu informieren.

Nach einer Ausführungsform der erfindungsgemäßen Radelektronik handelt es sich bei dem Peripheriegerät um einen Timer und/oder um einen Empfänger. Der Timer ist beispielsweise dafür vorgesehen, die Unterbrechungsanfrage periodisch zu erzeugen, so dass die Radelektronik periodisch die Nachricht über den Reifenparameter mittels ihres Senders an die Steuervorrichtung sendet. Der Empfänger kann dafür vorgesehen sein, aufgrund eines empfangenen Signals die Unterbrechungsanfrage zu erzeugen. Das empfangene Signal stammt beispielsweise von der im Fahrzeug angeordneten Steuervorrichtung.

Ein Ausführungsbeispiel der Erfindung ist exemplarisch in den beigefügten schematischen Zeichnungen dargestellt. Es zeigen:
- Fig. 1: ein Kraftfahrzeug, dessen Reifen Radelektroniken zugeordnet sind,
- Fig. 2: eine Radelektronik,
- Fig. 3: eine Teilschaltung der Radelektronik, und
- Fig. 4: Signalverläufe.

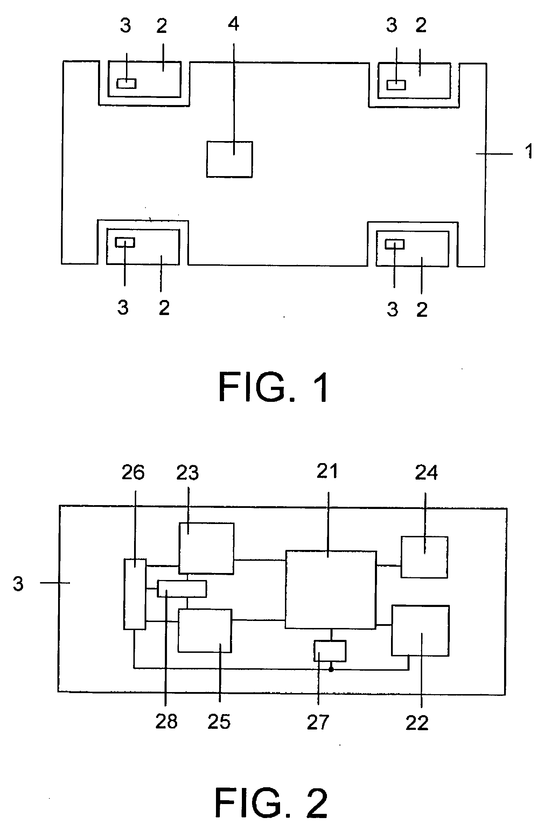

Die Fig.1 zeigt ein Kraftfahrzeug 1 mit vier Reifen 2, denen jeweils eine in der Fig. 2 näher dargestellte Radelektronik 3 zugeordnet ist. Die Radelektroniken 3 können z.B. in den entsprechenden Reifen 2 integriert oder beispielsweise an den Felgen, auf denen die Reifen 2 aufgezogen sind, angeordnet sein. Die Radelektroniken 3 sind vorgesehen, u.A. die Reifendrücke der jeweiligen Reifen 2 zu messen und eine Information über die gemessenen Reifendrücke an eine im Kraftfahrzeug 1 angeordnete Steuervorrichtung 4 drahtlos zu übermitteln. Die Steuervorrichtung 4 verarbeitet diese Information und informiert z.B. eine das Kraftfahrzeug lenkende Person, wenn einer der Reifendrücke zu niedrig ist. Die Radelektroniken 3 sind ein Beispiel einer Vorrichtung mit einem Prozessor und wenigstens einem Peripheriegerät.

Im Falle des vorliegenden Ausführungsbeispiels weist jede der Radelektroniken 3 einen Prozessor 21, einen Sende 22, einen Timer 23, einen Drucksensor 24, einen Empfänger 25 und eine Batterie 26 auf. Der Prozessor 21 ist z.B. ein Mikrokontroller oder ein Mikroprozessor und die Batterie 26 versorgt den Prozessor 21, den Sender 22, Empfänger 25 und den Timer 23 mit elektrischer Energie.

Im Falle des vorliegenden Ausführungsbeispiels ist es vorgesehen, dass die Radelektroniken 3 periodisch eine Information über den aktuellen Reifendruck ihres Reifens 3 mittels ihrer Sender 22 an die Steuervorrichtung 4 senden. Zusätzlich ist es vorgesehen, dass die Steuervorrichtung 4 eine Anfrage an die Radelektroniken 3 senden kann, aufgrund derer die Radelektroniken 3 die Reifendrücke ihre Reifen 3 ermitteln und mittels ihrer Senders 22 an die Steuervorrichtung 4 übermittelt. Diese Anfragen empfangen die Radelektroniken 3 mit ihren Empfängern 25.

Im Falle des vorliegenden Ausführungsbeispiels ermittelt der Prozessor 21 mittels des Drucksensors 24 den Reifendruck und erzeugt eine Nachricht über den Reifendruck, die mittels des Senders 22 an die Steuervorrichtung 4 übermittelt wird. Um Energie zu sparen, befindet sich der Prozessor 21 gewöhnlich in einem energiesparenden Schlaf- oder Ruhezustand. Nur wenn er die Nachricht über den Reifendruck erzeugen soll, wird er mittels Unterbrechungsanfragen aufgeweckt, und zwar entweder periodisch durch den Timer 23 oder gegebenenfalls durch den Empfänger 25. Der Timer 23 und der Empfänger 25 stellen somit Peripheriegeräte dar, die die Unterbrechungsanfragen an den Prozessor 21 richten.

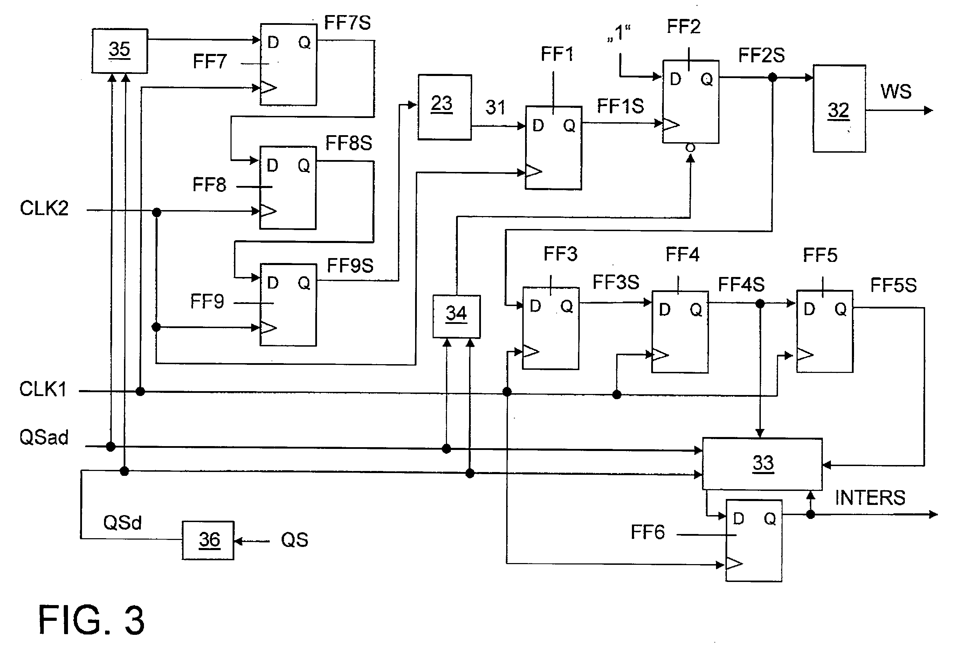

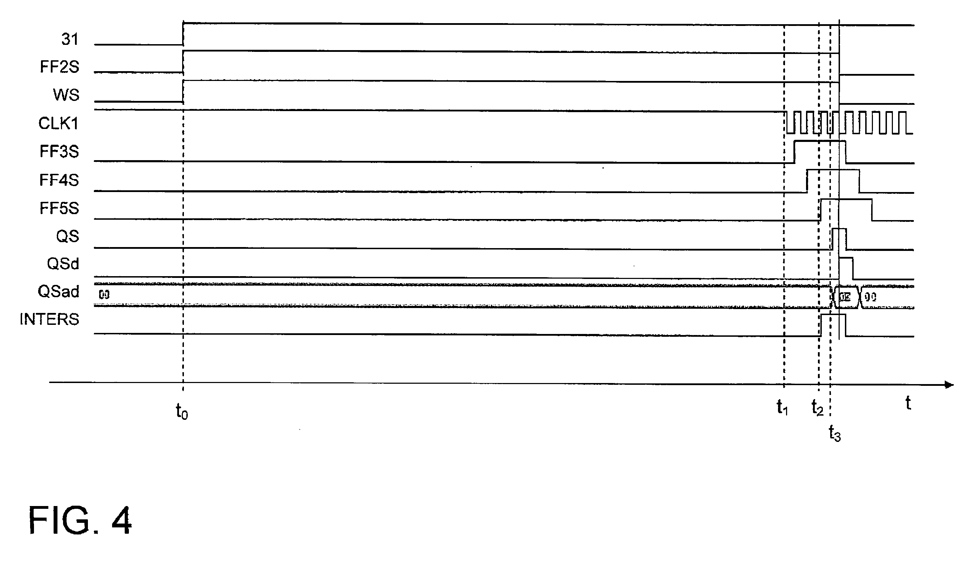

Aufgrund einer Unterbrechungsanfrage wird der Prozessor 21 aufgeweckt, also von seinem Ruhezustand in seinen Arbeitszustand versetzt, um die Unterbrechungsanfrage abzuarbeiten. Ist die Unterbrechungsanfrage abgearbeitet, dann erzeugt der Prozessor ein Quittiersignal, mit dem er das entsprechende Peripheriegerät über die abgearbeitete Unterbrechungsanfrage informiert. Alternativ kann das Quittiersignal auch schon vor dem Abarbeiten der Unterbrechungsanfrage erzeugt werden. Das Quittierungssignal wird auch verwendet, um den Prozessor 21 wieder in seinen Ruhezustand zu versetzten, außer es steht noch eine weitere Unterbrechungsanfrage an. Die Fig. 3 zeigt eine Schaltung, die im Falle des vorliegenden Ausführungsbeispiels dieses Szenario umsetzt, und die Fig. 4 zeigt Signalverläufe u.A. des vom Prozessor 21 erzeugten Quittiersignals QS.

Wenn sich der Prozessor 21 in seinem Arbeitszustand befindet, dann wird er mit einem Prozessortaktsignal CLK1 getaktet, das im Falle des vorliegenden Ausführungsbeispiels mittels eines ersten Taktgenerators 27 erzeugt wird. Der erste Taktgenerator 27 befindet sich ebenfalls normalerweise im Ruhezustand, wird durch ein Wecksignal WS aufgeweckt, um das Prozessortaktsignal CLK1 zu erzeugen und wird von der Batterie 26 mit Energie versorgt. Das Prozessortaktsignal CLK1 hat beispielsweise eine Taktfrequenz von 4 MHz.

Die Peripheriegeräte, also der Empfänger 25 und der Timer 23 befinden sich, im Gegensatz zum Prozessor 21, ständig in ihren Arbeitszuständen und werden ständig mit Peripherietaktsignalen CLK2 getaktet. Dabei ist es z.B. möglich, dass der Timer 23 und der Empfänger 25 mit jeweils unterschiedlichen Peripherietaktsignalen oder, wie es im Falle des vorliegenden Ausführungsbeispiels vorgesehen ist, von demselben Peripherietaktsignal CLK 2 getaktet werden. Das Peripherietaktsignal wird z.B. von einem zweiten Taktgenerator 28 erzeugt und die Taktfrequenz des Peripherietaktsignals CLK2 ist wesentliche kleiner als die Taktfrequenz des Prozessortaktsignals CLK1. Die Taktfrequenz des Peripherietaktsignals CLK2 ist beispielsweise 90 kHz.

Wenn eines der Peripheriegeräte den Prozessor 21 auffordern möchte, eine Nachricht über den aktuellen Reifendruck zu erzeugen, dann erzeugt dieses Peripheriegerät, z.B. der Timer 23, ein Signal 31, das einem ersten Flip-Flop FF1 zugeführt wird. Das erste Flip-Flop FF1 wird mit dem Peripherietaktsignal CLK2 des entsprechenden Peripheriegerätes, also hier des Timers 23, getaktet. Das Ausgangssignal des ersten Flip-Flops FF1 wird als Taktsignal einem zweiten Flip-Flop FF2 zugeführt, dessen Eingang auf logisch "1" gesetzt ist, sodass das Ausgangssignal FF2S des zweiten Flip-Flops FF2 mit steigender Flanke des Ausgangssignals FF1 s des ersten Flip-Flops FF1 auf "1" gesetzt wird. Das Ausgangssignal FF2S des zweiten Flip-Flops FF2 wird einem ODER-Gatter 32 zugeführt, an dessen Ausgang das Wecksignal WS für den ersten Taktgenerator 27 des Prozessors 21 ansteht. Ein weiteres, in der Fig. 3 nicht näher dargestelltes Eingangssignal für das ODER-Gatter 32 stammt vom Empfänger 25, d.h. das Wecksignal WS zum Aufwecken des ersten Taktgenerators 27 wird logisch "1", wenn der Timer 23 oder der Empfänger 25 eine Unterbrechungsanforderung für den Prozessor 21 hat. Wenn das Wecksignal WS für den ersten Taktgenerator 27 von logisch "0" auf logisch "1" schaltet, dann beginnt der erste Taktgenerator 27 nach einer gewissen Zeit, das Prozessortaktsignal CLK1 zu erzeugen, sodass der Prozessor 21 von seinem Ruhezustand in seinen Arbeitszustand schaltet. Im Falle des vorliegenden Ausführungsbeispiels wird das Wecksignal zum Zeitpunkt *t₀* und das Prozessortaktsignal CLK1 zum Zeitpunkt *t₁* erzeugt.

Das Ausgangssignal FF2S des zweiten Flip-Flops FF2 wird außerdem einer Schieberegisterkette zugeführt, die im Falle des vorliegenden Ausführungsbeispiels ein drittes, viertes und fünftes Flip-Flop FF3, FF4, FF5 aufweist, die jeweils mit dem Prozessortaktsignal CLK1 getaktet werden. Dabei erzeugt das dritte Flip-Flop FF3 ein Ausgangssignal FF3S, das vierte Flip-Flop FF4 ein Ausgangssignal FF4S und das fünfte Flip-Flop FF5 ein Ausgangssignal FF5S.

Die Ausgangssignale FF4S, FF5S des vierten und fünften Flip-Flops FF4, FF5 werden einer Logik 33 zugeführt, die im Falle des vorliegenden Ausführungsbeispiels eine steigende Flanke des Ausgangssignals FF5S des fünften Flip-Flops FF5 erkennt und daraufhin den Eingang eines sechsten Flip-Flops FF6, das ebenfalls mit dem Prozessortaktsignal CLK1 getaktet wird, mit logisch "1" beaufschlagt. Das Ausgangssignal des sechsten Flip-Flops FF6 ist das Interruptsignal INTER, das zum Zeitpunkt *t₂* ansteht und aufgrund dessen der Prozessor 21 die Unterbrechungsanfrage des Timers 23 anfängt zu bearbeiten.

Im Falle des vorliegenden Ausführungsbeispiels wird durch das das dritte, vierte und fünfte Flip-Flop FF3-FF5 aufweisende Schieberegister und durch das sechste Flip-Flop FF6 sicher gestellt, dass das Interruptsignal INTER synchron mit dem Prozessor 21 läuft.

Wenn der Prozessor 21 die Unterbrechungsanfrage abgearbeitet hat, dann erzeugt er das Quittiersignal QS und ein Adresssignal QSad, mittels dessen das Peripheriegerät, das die Unterbrechungsanfrage gestellt hat, adressiert wird. Im Falle des vorliegenden Ausführungsbeispiels ist das Adressiersignal QSas für den Timer 23 bestimmt. Damit das Adresssignal QSad erst ansteht, nachdem das Quittiersignal QS erzeugt wurde, wird dieses mittels eines Verzögerungselements 36 um einen halben Prozessortakt CLK1 verschoben, wodurch das Quittiersignal QSd entsteht, das wie das Quittiersignal QS synchron zum Prozessortakt CLK1 ist.

Im Falle des vorliegenden Ausführungsbeispiels erzeugt der Prozessor 21 das Quittiersignal QS zum Zeitpunkt *t₃*. Zum selben Zeitpunkt *t₃* wird das Adresssignal QSad erzeugt.

Das verzögerte Quittiersignal QAd und das Adresssignal QSad werden der Logik 33 und einer weiteren Logik 34 zugeführt. Die Logik 34 setzt das zweite Flip-Flop FF2 zurück, sodass die das Ausgangssignal FF2S des zweiten Flip-Flops FF2 wieder auf logisch "0" zurückgesetzt wird und das Wecksignal WS wieder abgeschaltet wird, außer es steht eine weitere Unterbrechungsanfrage, z.B. vom Empfänger 25 an. Somit wird der Prozessor 21 wieder in seinen Ruhezustand zurück versetzt. Somit erkennt der zum Prozessortaktsignal CLK1 synchrone Teil der Radelektronik 3 nach dem Abarbeiten der Unterbrechungsanfrage, dass die Unterbrechungsanfrage abgearbeitet wurde.

Damit auch das Peripheriegerät, von dem die Unterbrechungsanfrage stammt, ein Information über die abgearbeitete Unterbrechungsanfrage erhält, weist die Radelektronik 3 ein siebtes, achtes und neuntes Flip-Flop FF7-FF9 auf, von denen das siebte Flip-Flop FF7 mit dem Prozessortaktsignal CKL1 und das acht und neunte Flip-Flop FF8, FF9 mit dem Peripherietaktsignal CLK2 getaktet werden.

Im Falle des vorliegenden Ausführungsbeispiels wird das Quittiersignal QS und das Adresssignal QSad zunächst einer Logik 35 zugeführt, die u.A. das Adresssignal QSad dahingehend auswertet, ob das Quittiersignal QS für den Timer 23 bestimmt ist.

Ist das Quittiersignal QS für den Timer 23 bestimmt, dann wird das Eingangssignal des siebten Flip-Flops FF7 auf logisch "1" gesetzt und das Quittiersignal QS synchron mit dem Prozessortaktsignal CLK1 eingefangen. Das Ausgangssignal FF7S des mittels des Prozessortaktsignals CLK1 getakteten siebten Flip-Flops FF7 wird dem achten Flip-Flop FF8 zugeführt, das mit dem Peripherietaktsignal CLK2 getaktet ist. Das Ausgangssignal FF8S des mittels des achten Flip-Flops FF8 wird dem neunten Flip-Flop FF9 zugeführt, das ebenfalls mit dem Peripherietaktsignal CLK2 getaktet ist. Das Ausgangssignal FF9S des neunten Flip-Flops F9 ist synchron mit dem Peripherietaktsignal CLK2 und wird dem Timer 23 als Quittiersignal zugeführt.

Somit fängt das siebte Flip-Flop FF7 das vom Prozessor 21 erzeugte und synchron mit dem Prozessortakt CLK1 laufende Quittiersignal QS ein. Das achte und neunte Flip-Flop FF8, FF9 synchronisieren das Quittiersignal QS für den Timer 23 ein, d.h. erzeugen das Ausgangssignal FF9S, das synchron zum Peripherietaktsignal CLK2, also zum Timer 23, läuft als das Quittiersignal für den Timer 23. Die Radelektronik 3 kann nun wieder eine neue Unterbrechungsanfrage empfangen.

### Bezugszeichenliste

- 1: Kraftfahrzeug
- 2: Reifen
- 3: Radelektronik
- 4: Steuervorrichtung
- 21: Prozessor
- 22: Sender
- 23: Timer
- 24: Drucksensor
- 25: Empfänger
- 26: Batterie
- 27: erster Taktgenerator
- 28: zweiter Taktgenerator
- 31: Signal
- 32: ODER-Gatter
- 33-35: Logik
- 36: Verzögerungselement
- CLK1: Prozessortaktsignal
- CLK2: Peripherietaktsignal
- FF1-FF9: Flip-Flops
- FF1 S-FF9S: Ausgangssignale
- INTERS: Interruptsignal
- QS: Quittiersignal
- QSd: verzögertes Quittiersignal
- QSad: Adresssignal

## Patentansprüche

1. Vorrichtung, aufweisend
- einen Prozessor (21), der mittels eines Prozessortaktsignals (CLK1) getaktet wird und aufgrund einer Unterbrechungsanfrage (31) aus seinem Ruhezustand aufweckbar ist, um in seinem Arbeitszustand die Unterbrechungsanfrage abzuarbeiten und nach dem Abarbeiten oder während des Abarbeitens der Unterbrechungsanfrage ein zum Prozessortaktsignal (CLK1) synchrones Quittiersignal (QS) zu erzeugen,
- wenigstens ein Peripheriegerät (23, 25), das mittels eines Peripherietaktsignals (CLK2) getaktet wird, das zum Prozessortaktsignal (CLK1) asynchron läuft, und die Unterbrechungsanfrage (31) synchron zum Peripherietaktsignal (CLK2) an den Prozessor (21) sendet, und
- eine erste Logik (FF7-FF9), die aus dem zum Prozessortaktsignal (CLK1) synchronen Quittiersignal (QS) ein zum Peripherietaktsignal (CLK2) synchrones Quittiersignal (FF9S) erzeugt, mit dem das Peripheriegerät (23, 25) über die abgearbeitete Unterbrechungsanfrage informiert wird.

2. Vorrichtung nach Anspruch 1,
**dadurch gekennzeichnet,**
- **dass** die erste Logik (FF7-FF9) ein erstes Flip-Flop (FF7) aufweist, das mit dem Prozessortaktsignal (CLK1) getaktet wird und dessen Eingangssignal zumindest indirekt das zum Prozessortaktsignal (CLK1) synchrone Quittiersignal (QS) ist,
und
- **dass** die erste Logik (FF7-FF9) ein zweites Flip-Flop (FF8) zum Erzeugen des zum Peripherietaktsignal (CLK2) synchronen Quittiersignals (FF9S) aufweist, das mit dem Peripherietaktsignal (CLK2) getaktet wird und dessen Eingangssignal das Ausgangssignal (FF7S) des ersten Flip-Flops (FF7) ist.

3. Vorrichtung nach Anspruch 2,
**dadurch gekennzeichnet,**
**dass** die erste Logik (FF7-FF9) mehrere hintereinander geschaltete zweite Flip-Flops (FF8, FF9) aufweist, die jeweils mit dem Peripherietaktsignal (CLK2) getaktet werden, wobei das Ausgangssignal des zuletzt geschalteten zweiten Flip-Flops (FF9) das zum Peripherietaktsignal (CLK2) synchrone Quittiersignal (FF9S) darstellt.

4. Vorrichtung nach einem der Ansprüche 1 bis 3,
**gekennzeichnet durch**
eine zweite Logik (FF1-FF6, 33), die aus der synchron zum Peripherietaktsignal (CLK2) gesendeten Unterbrechungsanfrage (31) eine synchron zum Prozessortaktsignal (CLK1) laufende Unterbrechungsanfrage (INTERS) erzeugt, die dem Prozessor (21) zugeführt wird.

5. Vorrichtung nach Anspruch 4,
**dadurch gekennzeichnet,**
- **dass** die zweite Logik ein Schieberegister (FF3-FF5) aufweist, dessen Eingangssignal das synchron zum Peripherietaktsignal (CLK2) gesendete Unterbrechungsanfrage (31) oder zum Peripherietaktsignal (CLK2) gesendeten Unterbrechungsanfrage (31) synchrones Signal (FF2S) ist,
- **dass** die zweite Logik eine dem Schieberegister (FF3-FF5) nachgeschaltete Logik (33) zum Erkennen einer Flanke des Ausgangssignals (FF5S) des Schieberegisters (FF3-FF5) aufweist, und
- **dass** die zweite Logik ein Flip-Flop (FF6) aufweist, das mit dem Prozessortaktsignal (CLK1) getaktet wird, dessen Eingangssignal das Ausgangssignal der Logik (33) zum Erkennen einer Flanke ist und dessen Ausgangssignal die zum Prozessortaktsignal (CLK1) synchron laufende Unterbrechungsanfrage (INTERS) ist.

6. Verwendung der Vorrichtung nach einem der Ansprüche 1 bis 5 in einer Radelektronik zum Ermitteln wenigstens eines Reifenparameters eines Reifens (2), dem die Radelektronik (3) zugeordnet ist, aufweisend wenigstens einen Sensor (24) zum Ermitteln des Reifenparameters und einen Sender (22), wobei der Prozessor (21) aufgrund der Unterbrechungsanfrage mittels des Sensors (24) den Reifenparameter ermittelt und eine Nachricht über den Reifenparameter erzeugt, die der Sender (24) sendet.

7. Verfahren zum Erzeugen eines Quittiersignals, aufweisend folgende Verfahrensschritte:
- Erzeugen einer zu einem Peripherietaktsignal (CLK2) synchronen Unterbrechungsanfrage (31) mittels eines Peripheriegerätes (23, 25), das mit dem Peripherietaktsignal (CLK2) getaktet wird,
- Aufwecken eines Prozessors (21) aufgrund der Unterbrechungsanfrage, sodass dieser von seinem Ruhezustand in seinen Arbeitszustand wechselt, um die Unterbrechungsanfrage abzuarbeiten, wobei der Prozessor (21) mit einem Prozessortaktsignal (CLK1) getaktet wird, das asynchron zum Peripherietaktsignal (CLK2) läuft,
- Erzeugen eines zum Prozessortaktsignal (CLK1) synchronen Quittiersignals (QS), nachdem der Prozessor (21) die Unterbrechungsanfrage abgearbeitet hat oder während der Prozessor (21) die Unterbrechungsanfrage abarbeitet, und
- Erzeugen eines zum Peripherietaktsignal (CLK2) synchronen Quittiersignals (FF9S) aus dem zum Prozessortaktsignal (CLK1) synchronen Quittiersignal (QS) mittels einer ersten Logik (FF7-FF9), um das Peripheriegerät (23, 25) über die abgearbeitete Unterbrechungsanfrage zu informieren.

8. Verfahren nach Anspruch 7,
**dadurch gekennzeichnet,**
- **dass** die erste Logik (FF7-FF9) ein erstes Flip-Flop (FF7) aufweist, das mit dem Prozessortaktsignal (CLK1) getaktet wird und dessen Eingangssignal zumindest indirekt das zum Prozessortaktsignal (CLK1) synchrone Quittiersignal (QS) ist,
und
- **dass** die erste Logik (FF7-FF9) ein zweites Flip-Flop (FF8) zum Erzeugen des zum Peripherietaktsignal (CLK2) synchronen Quittiersignals (FF9S) aufweist, das mit dem Peripherietaktsignal (CLK2) getaktet wird und dessen Eingangssignal das Ausgangssignal (FF7S) des ersten Flip-Flops (FF7) ist.

9. Verfahren nach Anspruch 8,
**dadurch gekennzeichnet,**
**dass** die erste Logik (FF7-FF9) mehrere hintereinander geschaltete zweite Flip-Flops (FF8, FF9) aufweist, die jeweils mit dem Peripherietaktsignal (CLK2) getaktet werden, wobei das Ausgangssignal des zuletzt geschalteten zweiten Flip-Flops (FF9) das zum Peripherietaktsignal (CLK2) synchrone Quittiersignal (FF9S) darstellt.

10. Verfahren nach einem der Ansprüche 7 bis 9,
**gekennzeichnet durch**
eine zweite Logik (FF1-FF6, 33), die aus der synchron zum Peripherietaktsignal (CLK2) gesendeten Unterbrechungsanfrage (31) ein synchron zum Prozessortaktsignal (CLK1) laufende Unterbrechungsanfrage (INTERS) erzeugt, die dem Prozessor (21) zugeführt wird.

11. Verfahren nach Anspruch 10,
**dadurch gekennzeichnet,**
- **dass** die zweite Logik ein Schieberegister (FF3-FF5) aufweist, dessen Eingangssignal die synchron zum Peripherietaktsignal (CLK2) gesendete Unterbrechungsanfrage (31) oder ein zum Peripherietaktsignal (CLK2) gesendete Unterbrechungsanfrage (31) synchrones Signal (FF2S) ist,
- **dass** die zweite Logik eine dem Schieberegister (FF3-FF5) nachgeschaltete Logik (33) zum Erkennen einer Flanke des Ausgangssignals (FF5S) des Schieberegisters (FF3-FF5) aufweist, und
- **dass** die zweite Logik ein Flip-Flop (FF6) aufweist, das mit dem Prozessortaktsignal (CLK1) getaktet wird, dessen Eingangssignal das Ausgangssignal der Logik (33) zum Erkennen einer Flanke ist und dessen Ausgangssignal die zum Prozessortaktsignal (CLK1) synchron laufende Unterbrechungsanfrage (INTERS) ist.

12. Verfahren nach einem der Ansprüche 10 oder 11,
**dadurch gekennzeichnet,**
**dass** die zweiten Logik (FF1-FF6, 33) aus der synchron zum Peripherietakt (CLK2) gesendeten Unerbrechungsanfrage (31) ein Wecksignal (WS) für den Prozessor (21) erzeugt.

13. Verfahren nach einem der Ansprüche 7 bis 12,
**dadurch gekennzeichnet,**
**dass** Prozessortaktsignal (CLK1) eine höhere Taktfrequenz als das Peripherietaktsignal (CLK2) hat.

14. Verfahren nach einem der Ansprüche 7 bis 13,
**dadurch gekennzeichnet,**
**dass** der Prozessor (21), das Peripheriegerät (23, 25) und die erste Logik (FF7S-FF9S) Teil einer Radelektronik (3) zum Ermitteln wenigstens eines Reifenparameters eines Reifens (2) sind, dem die Radelektronik (3) zugeordnet ist, und **gekennzeichnet durch**
- Messen eines Reifenparameters des Reifens (2) mittels eines Sensors (24) der Radelektronik (3),
- Erzeugen einer Nachricht über den Reifenparameter des Reifens (2) mittels des Prozessors (21) aufgrund einer Unterbrechungsanfrage und
- Senden der Nachricht mittels eines Senders (22) der Radelektronik (3).
